# EUROPEAN PATENT SPECIFICATION

(11) **EP 3 504 953 B1**
(45) Date of publication and mention of the grant of the patent: **27.05.2020**
(21) Application number: 18212519.5
(22) Date of filing: 14.12.2018
(51) Int. Cl.: A01D 34/66, A01D 34/82, F16B 7/10, F16B 21/12, F16B 21/14, A01D 34/64

(54) **A MANUAL LOCKING/RELEASING DEVICE FOR A CUTTING PLATE**
VORRICHTUNG MIT MANUELLEM SPERREN/LÖSEN FÜR EINE SCHNEIDPLATTE
DISPOSITIF DE VERROUILLAGE/LIBÉRATION MANUELS POUR UNE PLAQUE DE DÉCOUPE

(30) Priority: 27.12.2017 IT 201700149835
(43) Date of publication of application: 03.07.2019
(73) Proprietor: Stiga S.p.A. in breve anche St. S.p.A., 31033 Castelfranco Veneto (TV) (IT)
(72) Inventor: CALABRO', Alberto, 35017 Piombino Dese (PD) (IT); SOLIGO, Andrea, 31033 San Floriano Di Castelfranco Veneto (TV) (IT)
(74) Representative: Mittler, Andrea

(56) References cited:
- WO-A1-2008/133569
- US-B1- 6 516 597
- US-B2- 9 603 303

## Description

The present invention relates to a manual locking/releasing device for a cutting plate.

Lawn tractors comprising a cutting plate separably associated with the front part of a tractor are known. This allows different types of cutting plates to be associated with the same tractor according to the needs, e.g. a cutting plate with several cutting blades connected by transmission belts.

After several work sessions, the need arises to clean the cutting area without separating the cutting plate from the tractor.

The cutting plate is normally lifted, by gripping it at the front part thereof, causing a rotation of 40°-60° so as to make the cutting area accessible while keeping the tractor still with the wheels resting on the ground.

Systems allowing the cutting plate to be kept in a raised and inclined position are known.

The use of locking/releasing devices is known to ensure user safety, thus preventing or allowing relative movements between two components, e.g. of the bodywork of the cutting plate with respect to a lever thereof connected to the tractor.

Said devices comprise pivots which are manually maneuverable by means of levers.

US-9603303 describes a pivot which is movable between a locking position and a releasing position by means of a lever. Said pivot vertically slides with a spring, which adjusts the sliding stress thereof; a pin orthogonal to the sliding axis adapted to be inserted into a cavity is fixed to said pivot. Said pivot is used for controlling the inclination of a front connection of a vehicle for useful operations.

EP-2141978 shows a cutting plate, which can be associated with a tractor, comprising a pivot for hooking/unhooking a stop means to a tubular element of the cutting plate. Said pivot is welded to a plate, a locking pin being provided welded thereto.

WO-2008/133569 describes a locking/releasing device for a cutting plate of a lawn mower.

Disadvantageously, the pivots described are not adjustable, comprising a single locking position.

Furthermore, they do not have safety means adapted to keep at least a partial lock in the event of breaking.

It is an object of the present invention to manufacture a locking/releasing device, which offers flexible use and is simple to be constructed.

It is a further object of the present invention that said device can be used to prevent/allow the lifting of a cutting plate with respect to a tractor with which it is separably associated.

It is a yet further object of the present invention that said safety device allows several locking positions to be selected according to the application thereof.

According to the invention said and further objects are achieved by a locking/releasing device as defined in claim 1.

Advantageously, an operator can manually allow the lifting of the plate while keeping the bushing integral with the bar in a predetermined position.

The plurality of adjustment holes allows a flexible use on various lawnmower tractor models, and more generally in applications in which locking/releasing the movement between two mechanical components is required.

These and other features of the present invention will become more apparent from the following detailed description of a practical embodiment thereof shown by way of a non-limiting example in the accompanying drawings, in which:
figure 1 shows a side view of a lawn mower with a cutting plate in a lowered working position;
figure 2 shows a side view of the lawn mower with the cutting plate in a raised washing position;

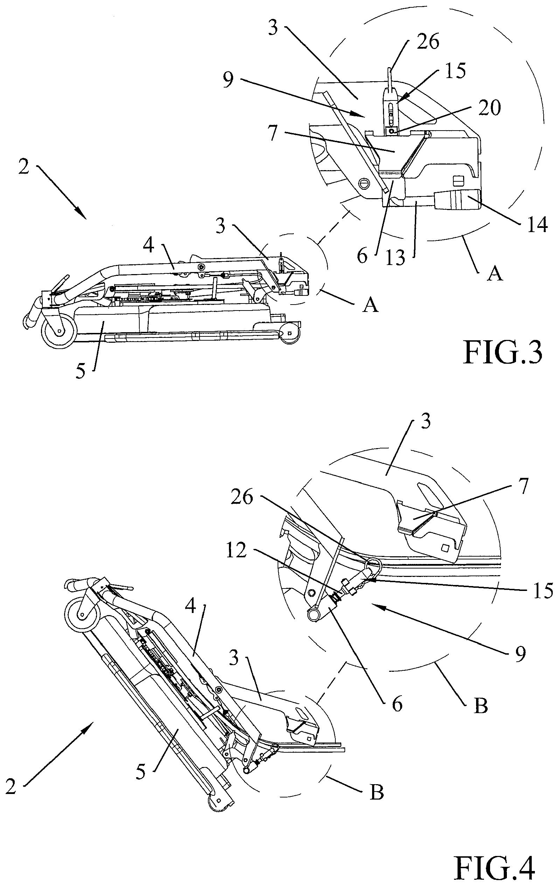

figure 3 shows a side view of the cutting plate in a lowered position with an enlarged portion confined in circle A;
figure 4 shows a side view of the cutting plate in a raised washing position, with an enlarged portion confined in circle B;

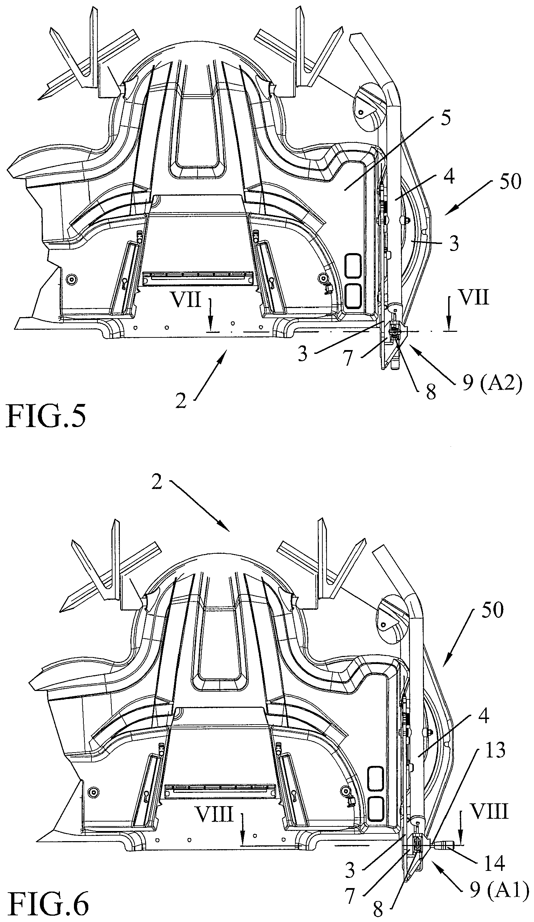

figure 5 shows a partial plan view of the cutting plate with a locking/releasing device in the locking position;
figure 6 shows a partial top plan view of the cutting plate with the locking/releasing device in the releasing position;
figure 7 shows a section view according to line VII-VII of figure 5;
figure 8 shows a section view according to line VIII-VIII of figure 6;
figure 9 shows a partial perspective view of the cutting plate with an exploded view of the locking/releasing device.

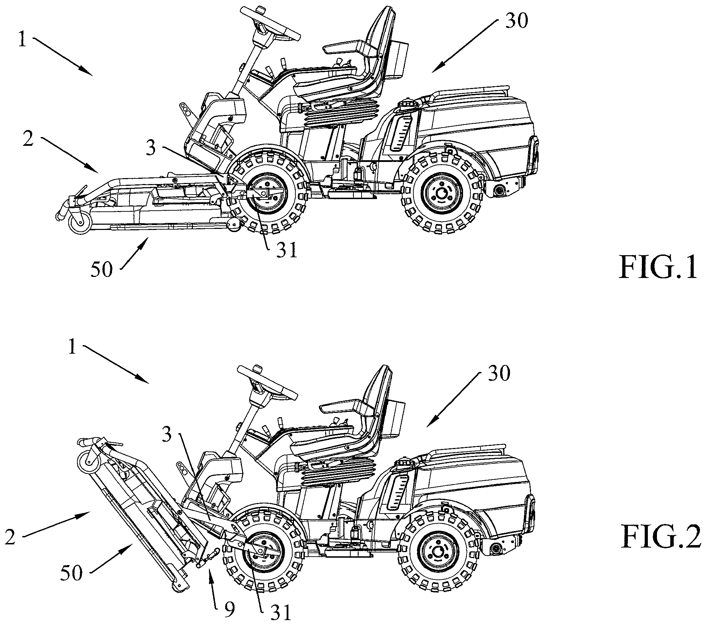

A lawnmower 1 comprises a tractor 30 and a cutting plate 2 (figures 1, 2).

The cutting plate 2 is separably associated with front connections 31 of the tractor 30 by means of respective levers 3.

When fastened to the respective connections 31, the levers 3 are integral with the tractor 30.

Said levers 3 are rotatably associated with a tubular element 4 of the plate 2.

The plate 2 further comprises a bodywork 5 to which said tubular element 4 is fixed and with which are rotatably associated rotors (not shown) to which respective cutting blades (not shown) are inferiorly fixed.

The assembly of the bodywork 5 and the tubular element 4 forms a frame 50 for the cutting plate 2 of lawnmower 1.

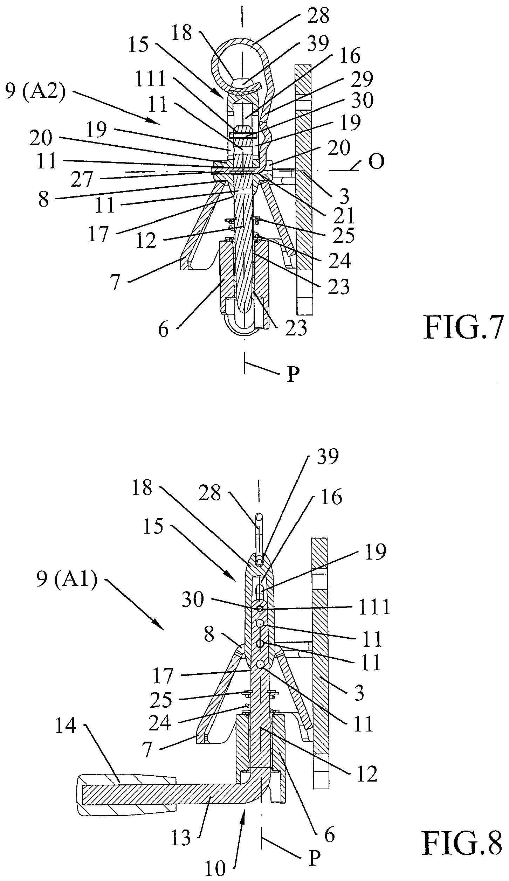

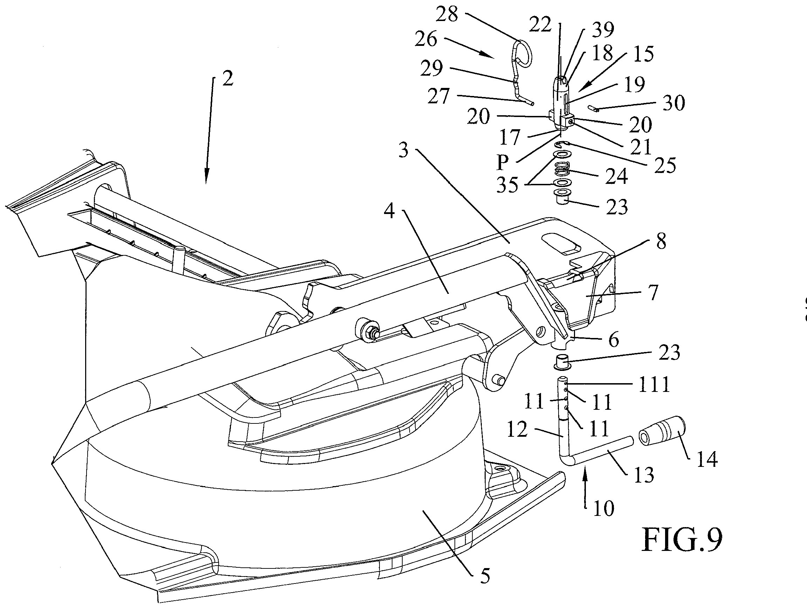

A tubular bracket 6 is fixed to the tubular element 4 (figures 7-9).

The lever 3 has a portion 7 provided with a through opening 8.

A locking/releasing device 9 comprises an L-shaped bar 10 comprising three adjustment through-holes 11 and a safety through-hole 111 at a first arm 12 of said bar 10. The hole 111 is the closest to the free end of arm 12.

A knob 14 can be associated with a second arm 13 of said bar 10.

The device 9 further comprises a bushing 15 provided with a cavity 16, which develops from a mouth 17.

Said bushing 15 further comprises a head 18 in which a notch 39 is obtained.

The head 18 is opposite to the mouth 17 with respect to a longitudinal axis P of the bushing 15.

The bushing 15 has two further side openings 19 of the cavity 16, arranged at 180° from each other with respect to said axis P.

A block 20 is present between each opening 19 and the mouth 17.

The blocks 20 have a through-hole 21 facing the cavity 16.

The blocks 20 are arranged at 180° with respect to each other so that said through-holes 21 are aligned according to a transverse axis O orthogonal to said axis P.

Said blocks 20 extend laterally beyond a side surface 22 of bushing 15 interrupted by said openings 19.

The Device 9 further comprises sleeves 23, a spiral spring 24, a stop ring 25, two washers 35, a safety pin 30 and an elastic element 26.

Said elastic element 26 comprises a straight end 27 and a rounded end 28. An intermediate section 29, which follows a broken line, connects said ends 27, 28.

The device 9 is operatively associated with the cutting plate 2 as follows.

The arm 12 is inserted from below into the tubular bracket 6 crossing it from one side to the other.

The portion of the arm 12, protruding from the tubular bracket 6, comprises at least one hole 11 and the safety hole 111.

After fitting onto arm 12 from above the washers 35, the spring 24, the stop ring 25 and a sleeve 23 (a second sleeve 23 is inserted before passing the arm 12 into the tubular bracket 6), the bushing 15 is coupled to the bar 10 thus causing it to slide on the arm 12.

The pin 30 is inserted into the hole 111 through the side openings 19.

The cavity 16 of the bushing 15 fits the arm 12 until a correct locking point is identified.

In order to lock the bushing 15 with respect to the bar 10, the bushing 15 is positioned so that the through-holes 21 of the blocks 20 are aligned with at least one through-hole 11, and the straight end 27 of the elastic element 26 is inserted so that it is simultaneously engaged with said holes 11,21.

The rounded end 28 is engaged with elastic stress into notch 39, thus preventing the accidental unthreading of the straight end 27.

It should be noted that one of the two holes 21 is shorter in order to allow the positioning of the intermediate portion 29 of the elastic element 26 which protrudes upwards. Therefore, one of the two blocks 20 is partially open at the top.

The bushing 15 is no longer able to slide on bar 10.

The opening 8 has a shape such that the bushing 15 can only cross it when it takes a determined angular position A1 about the axis P. Otherwise, the blocks 20 abut on the upper edges of opening 8 (figure 7).

In order to prevent the bushing 15 from unthreading through the opening 8, it is essential that it does not take the angular position A1, i.e. the releasing position.

The spiral spring 24 and the stop ring 25 contrast the rotation of the bushing 15 with respect to the bar 10. The locking position preferably coincides with an angular position A2 (figure 7) rotated by 90° with respect to A1 (figure 8). If the device 9 is in the locking position, the lever 3 is integral with the tubular element 4: the plate 2 cannot lift.

In the event of accidental breaking of the elastic element 26, the bushing 15 will not completely unthread from the bar 10, because the pin 30 will abut on the lower part of the openings 19. In fact, the pin 30 has a greater length than the width of the cavity 16, but it does not protrude from the openings 19.

Therefore, in the event of an emergency, the pin 30 performs the function of the straight end 27 of the elastic element 26, thus using the lower part of the openings 19. The device 9 is selectively movable from a locking position to a releasing position by simply rotating the bar 10.

Advantageously, an operator can manually allow the lifting of the plate, while keeping the bushing 15 integral with the bar 10 in a predetermined position.

The plurality of adjustment holes 11 allows a flexible use on various lawn tractor models, and more generally in applications in which locking/releasing the movement between two mechanical components is required.

The safety hole 111 provides a useful instrument in case of damaging of other transmission members.

The device 9 comprises components which can easily be found on the market and which are simple to be assembled and highly lightweight.

## Claims

1. A locking/releasing device (9) for a cutting plate (2) of a lawn mower (1), **characterized in that** it comprises
a bar (10) having through-holes (11, 111), and a bushing (15) provided with a cavity (16) closed at a head (18) of the bushing (15) and which develops from a mouth (17) opposite to said head (18) with respect to a longitudinal axis (P) of the bushing (15), said bar (10) being adapted to be partially inserted into said cavity (16) of the bushing (15),
said bushing (15) further comprises two blocks (20) which have respective through-holes (21) facing the cavity (16) and which are arranged at 180° with respect to each other so that said through-holes (21) are aligned according to a transverse axis (O) orthogonal to said longitudinal axis (P), said blocks (20) extending laterally in the direction of the transverse axis (O) beyond a side surface (22) of the bushing (15),
said device (9) further comprises an elastic element (26) adapted to elastically connect the head (18) and the blocks (20) of the bushing (15),
said elastic element (26) comprises a straight end (27) adapted to be inserted into the through-holes (21) of the two blocks (20) and into one of the through-holes (11, 111) of the bar (10).

2. A device (9) according to claim 1, **characterized in that** said bushing (15) comprises two side openings (19) of the cavity (16) arranged at 180° from each other with respect to said longitudinal axis (P), said blocks (20) being arranged between each opening (19) and the mouth (17), said device (9) further comprising a safety pin (30) adapted to engage a through-hole (111) of the bar (10) facing said openings (19) beyond the cavity (16).

3. A device (9) according to claim 1 or 2, **characterized in that** said bar (10) is L-shaped and comprises a first arm (12) in which said through-holes (11, 111) are obtained, and a second arm (13) with which a knob (14) can be associated.

4. A device (9) according to claim 2 or 3, **characterized in that** said bar (10) comprises at least two adjustment through-holes (11) and a safety through-hole (111), said safety through-hole (111) being the closest to the free end of the bar (10) adapted to be inserted into the cavity (16) of the bushing (15).

5. A device (9) according to any one of the preceding claims, **characterized in that** said elastic element (26) comprises a rounded end (28) and an intermediate section (29) which follows a broken line connecting said straight and rounded ends (27, 28).

6. A device (9) according to claim 5, **characterized in that** a notch (39), adapted to be coupled to the rounded end (28) of the elastic element (26), is obtained in said head (18).

## Patentansprüche

1. Verriegelungs-/Freigabevorrichtung (9) für eine Schneidplatte (2) eines Rasenmähers (1),
**dadurch gekennzeichnet ist, dass** sie Folgendes aufweist:
eine Stange (10) mit Durchgangslöchern (11, 111) und eine Buchse (15), die mit einem Hohlraum (16) versehen ist, der an einem Kopf (18) der Buchse (15) geschlossen ist und der sich von einer dem Kopf (18) gegenüberliegenden Mündung (17) in Bezug auf eine Längsachse (P) der Buchse (15) entwickelt, wobei die Stange (10) dazu ausgebildet ist, teilweise in den Hohlraum (16) der Buchse (15) eingeführt zu werden,
wobei die Buchse (15) ferner zwei Blöcke (20) aufweist, die jeweilige dem Hohlraum (16) zugewandte Durchgangslöcher (21) aufweisen und die in einem Winkel von 180 ° zueinander angeordnet sind, so dass die Durchgangslöcher (21) in Übereinstimmung mit einer Querachse (O) orthogonal zu der Längsachse (P) ausgerichtet sind, wobei sich die Blöcke (20) in Richtung der Querachse (O) seitlich über eine Seitenfläche (22) der Buchse (15) hinaus erstrecken,
wobei die Vorrichtung (9) ferner ein elastisches Element (26) aufweist, das dazu ausgebildet ist, den Kopf (18) und die Blöcke (20) der Buchse (15) elastisch zu verbinden,
wobei das elastische Element (26) ein gerades Ende (27) aufweist, das dazu ausgebildet ist, in die Durchgangslöcher (21) der beiden Blöcke (20) und in eines der Durchgangslöcher (11, 111) der Stange (10) eingesetzt zu werden.

2. Vorrichtung (9) nach Anspruch 1,
**dadurch gekennzeichnet, dass** die Buchse (15) zwei seitliche Öffnungen (19) des Hohlraums (16) aufweist, die in Bezug auf die Längsachse (P) in einem Winkel von 180° zueinander angeordnet sind, wobei die Blöcke (20) zwischen der jeweiligen Öffnung (19) und der Mündung (17) angeordnet sind, wobei die Vorrichtung (9) ferner einen Sicherheitsstift (30) aufweist, der dazu ausgebildet ist, in ein den Öffnungen (19) jenseits des Hohlraums (16) zugewandtes Durchgangsloch (111) der Stange (10) einzugreifen.

3. Vorrichtung (9) nach Anspruch 1 oder 2,
**dadurch gekennzeichnet, dass** die Stange (10) L-förmig ist und einen ersten Arm (12), in dem die Durchgangslöcher (11, 111) gebildet sind, sowie einen zweiten Arm (13) aufweist, mit dem ein Knopf (14) verbunden werden kann.

4. Vorrichtung (9) nach Anspruch 2 oder 3,
**dadurch gekennzeichnet, dass** die Stange (10) mindestens zwei Einstell-Durchgangslöcher (11) und ein Sicherheits-Durchgangsloch (111) aufweist, wobei sich das Sicherheits-Durchgangsloch (111) in unmittelbarer Nähe zu dem freien Ende der Stange (10) befindet, das sich in den Hohlraum (16) der Buchse (15) einführen lässt.

5. Vorrichtung (9) nach einem der vorhergehenden Ansprüche,
**dadurch gekennzeichnet, dass** das elastische Element (26) ein abgerundetes Ende (28) und einen zwischengeordneten Abschnitt (29) aufweist, der einer unterbrochenen Linie folgt, die das gerade und das abgerundete Ende (27, 28) miteinander verbindet.

6. Vorrichtung (9) nach Anspruch 5,
**dadurch gekennzeichnet, dass** in dem Kopf (18) eine Kerbe (39) gebildet ist, die dazu ausgebildet ist, mit dem abgerundeten Ende (28) des elastischen Elements (26) gekoppelt zu werden.

## Revendications

1. Dispositif de verrouillage/libération (9) pour une plaque de coupe (2) d'une tondeuse à gazon (1), **caractérisé en ce qu'**il comprend :
une barre (10) ayant des trous débouchants (11, 111) et une douille (15) prévue avec une cavité (16) fermée au niveau d'une tête (18) de la douille (15) et qui se développe à partir d'une bouche (17) opposée à ladite tête (18) par rapport à un axe longitudinal (P) de la douille (15), ladite barre (10) étant adaptée pour être partiellement insérée dans ladite cavité (16) de la douille (15),
ladite douille (15) comprend en outre deux blocs (20) qui ont des trous débouchants (21) respectifs faisant face à la cavité (16) et qui sont agencés à 180° les uns par rapport aux autres, de sorte que lesdits trous débouchants (21) sont alignés selon un axe transversal (O) orthogonal audit axe longitudinal (P), lesdits blocs (20) s'étendant latéralement dans la direction de l'axe transversal (O) au-delà d'une surface latérale (22) de la douille (15),
ledit dispositif (9) comprend en outre un élément élastique (26) adapté pour raccorder élastiquement la tête (18) et les blocs (20) de la douille (15),
ledit élément élastique (26) comprend une extrémité droite (27) adaptée pour être insérée dans les trous débouchants (21) des deux blocs (20) et dans l'un des trous débouchants (11, 111) de la barre (10).

2. Dispositif (9) selon la revendication 1, **caractérisé en ce que** ladite douille (15) comprend deux ouvertures latérales (19) de la cavité (16) agencées à 180° l'une de l'autre par rapport audit axe longitudinal (P), lesdits blocs (20) étant agencés entre chaque ouverture (19) et la bouche (17), ledit dispositif (9) comprenant en outre une broche de sécurité (30) adaptée pour mettre en prise un trou débouchant (111) de la barre (10) faisant face auxdites ouvertures (19) au-delà de la cavité (16).

3. Dispositif (9) selon la revendication 1 ou 2, **caractérisé en ce que** ladite barre (10) est en forme de L et comprend un premier bras (12) dans lequel lesdits trous débouchants (11, 111) sont obtenus, et un second bras (13) avec lequel un bouton (14) peut être associé.

4. Dispositif (9) selon la revendication 2 ou 3, **caractérisé en ce que** ladite barre (10) comprend au moins deux trous débouchants d'ajustement (11) et un trou débouchant de sécurité (111), ledit trou débouchant de sécurité (111) étant le plus près de l'extrémité libre de la barre (10) adaptée pour être insérée dans la cavité (16) de la douille (15).

5. Dispositif (9) selon l'une quelconque des revendications précédentes, **caractérisé en ce que** ledit élément élastique (26) comprend une extrémité arrondie (28) et une section intermédiaire (29) qui suit une ligne en pointillés raccordant lesdites extrémités droite et arrondie (27, 28).

6. Dispositif (9) selon la revendication 5, **caractérisé en ce qu'**une encoche (39) adaptée pour être couplée à l'extrémité arrondie (28) de l'élément élastique (26), est obtenue dans ladite tête (18).
